# EUROPÄISCHE PATENTSCHRIFT

(11) **EP 1 054 239 B1**
(45) Veröffentlichungstag und Bekanntmachung des Hinweises auf die Patenterteilung: **09.03.2005**
(21) Anmeldenummer: 00110467.8
(22) Anmeldetag: 17.05.2000
(51) Int. Cl.: G01D 11/24, G01K 13/00

(54) **Bedien- und Anzeigegerät**
Control- and display device
Appareil de commande et d'affichage

(30) Priorität: 20.05.1999 DE 19923015
(43) Veröffentlichungstag der Anmeldung: 22.11.2000
(73) Patentinhaber: Testo GmbH & Co., 79853 Lenzkirch (DE)
(72) Erfinder: Derr, Andreas, 79793 Wutöschingen (DE); Zahn, Patrick, 79871 Eisenbach (DE)
(74) Vertreter: Patentanwälte Westphal, Mussgnug & Partner

(56) Entgegenhaltungen:
- EP-A- 0 171 769
- EP-A- 0 180 951
- EP-A- 0 410 186
- DE-U- 29 820 206

## Beschreibung

Die Erfindung betrifft ein Bedien- und Anzeigegerät gemäß dem Oberbegriff des Anspruchs 1, dass heißt ein tragbares, elektrisches Bedien- und Anzeigegerät mit einem Anzeigenfeld, mit einer Tastatur mit mindestens einem Tastenfeld und mit einem Gehäuse.

Derartige tragbare Geräte sind in mannigfaltigen Ausführungsformen, beispielsweise als Messgeräte, allgemein bekannt und bedürfen daher keiner weiteren Erläuterung.

Diese Geräte finden einen großen Anwendungsbereich in der Lebensmittelindustrie und in lebensmittelverarbeitenden Betrieben, wie z. B. Schlachthöfen, Kühlhäuser, Restaurants, usw. In diesem Anwendungsbereich sind mitunter sehr hohe Hygieneanforderungen zu erfüllen, die in einer Vielzahl von nationalen und internationalen Verordnungen ihren Niederschlag finden. Um die vorgegebenen strengen Hygieneanforderungen zu erfüllen, ergibt sich oftmals das Problem der Reinigung der Messgeräte. Insbesondere muss hier unter allen Umständen vermieden werden, dass über und mit den Messgeräten Verunreinigungen, beispielsweise bakterieller Art, erst in das Messgerät eingeschleppt werden.

Um derlei Effekte ausschließen zu können werden Messgeräte typischerweise mit Schutzvorrichtungen versehen. Diese Schutzvorrichtungen dienen der hermetischen Abdichtung des Messgerätes gegen Wasser, Staub und sonstigen Verunreinigungen mit der wesentlichen Randbedingung, dass die Funktionalität und die Bedienung des Gerätes durch die Schutzvorrichtung nicht beeinträchtigt wird.

Die einfachsten Schutzvorrichtungen bestehen aus flexiblen, zumeist transparenten, beutelartigen Schutzhüllen, die mehr oder weniger gut wasser- und staubdicht verschlossen werden können. Die Funktionalität und die Bedienungsmöglichkeit des von der Schutzhülle geschützten Messgerätes bleibt aufgrund der flexiblen Hülle erhalten. Allerdings sind diese flexiblen Schutzhüllen aus einem relativ dünnen Kunststoffmaterial gefertigt, wodurch die Funktionalität derartiger Schutzhüllen unter den rauen Betriebsbedingungen, denen die Messgeräte mitunter ausgesetzt sind, mehr oder weniger kurz ist. Unter extremen Betriebsbedingungen besteht auch die Gefahr, dass das Messgerät infolge äußerer Krafteinwirkung beschädigt wird, da die dünne Schutzhülle äußerst stoß- und kraftempfindlich ist, d. h. kaum Kräfte aufnehmen kann.

Ein weiterer Nachteil dieser bekannten Schutzhüllen ist die Tatsache, dass bereits geringste Beschädigungen der Schutzhüllenoberfläche ausreichen, dass die geforderte Wasserdichtigkeit nicht mehr gewährleistet ist. Dadurch kann jedoch der elektrische oder elektronische Schaltkreis des Messgerätes, der naturgemäß sehr feuchtigkeitsempfindlich ist, irreversibel Schaden nehmen bzw. sogar zerstört werden. Auch ist das Befestigen eines Messgerätes an einer vorgesehenen Halterung oder das Anschließen von externen Komponenten an das Messgerät nicht mehr möglich, wenn sich das Messgerät einmal in der Schutzhülle befindet.

In der DE 39 05 130 A1 ist eine weiterentwickelte Schutzvorrichtung für ein Messgerät beschrieben. Im Gegensatz zu der gerade beschriebenen beutelartigen, flexiblen Schutzvorrichtung ist in der DE 39 05 130 A1 eine deckelartige Blende aus einem formstabilen Material als Schutzvorrichtung angegeben. Die Blende deckt hierbei die in dem Gehäuse angeordneten Bedien- und Anzeigeelemente ab, wodurch diese geschützt werden. Zur Befestigung des Deckels an dem Gehäuse sind Befestigungmittel vorgesehen, zur Herstellung einer Dichtigkeit ist eine im Gehäuseteil des Messgerätes umlaufende, integrierte Dichtlippe vorgesehen. Die die Bedien- bzw. Anzeigenelemente abdeckende und abdichtende Blende ist zumindest in den Bereichen der genannten Anzeigen- bzw. Bedienelemente transparent.

Alternativ wäre auch denkbar, dass die Schutzvorrichtung als zweiteiliges Schutzgehäuse (Holster) ausgebildet ist, wobei die Innenkontur des Schutzgehäuses derart ausgestaltet ist, dass das Messgerät weitgehend spielfrei einsetzbar ist und die beiden Schutzgehäuseteile über Befestigungselemente zusammengehalten werden

Wenngleich die als formstabile Blende ausgestaltete Schutzvorrichtung wie auch das als Holster ausgebildete Schutzgehäuse bei einem gattungsgemäßen Bedien- und Anzeigegerät eine große Wasserdichtigkeit aufweist und zudem auch einen verbesserten Schutz gegenüber äußerer Krafteinwirkung gewährleisten, ergeben sich hier dennoch folgende Probleme:
- Da die in den o. g. Bereichen einzusetzenden Messgeräte immer ein zusätzliches Schutzgehäuse benötigen, sind deren Herstellungskosten deutlich erhöht.
- Es ist hier auch nicht möglich, eine Blende aus einem sehr weichen, beispielsweise elastomeren Kunststoff zu verwenden, da dieser die zur Herstellung einer hohen Dichtigkeit erforderliche Steifheit nicht oder nur bedingt aufbringt. Es muss also ein Zweikomponententeil mit hoher Steifheit eingesetzt werden, um die geforderte stoßabsorbierende, weiche Oberfläche zu erhalten. Dies ist jedoch allein schon aus Kostengründen häufig nicht akzeptabel.
- Aufgrund der im Gehäuseteil integrierten, rundum verlaufenden Dichtlippe wird großflächig abgedichtet, was insbesondere dann, wenn eine hohe Dichtigkeit gefordert ist, sehr aufwendig ist. Häufig sind deshalb viele Stützstellen, beispielsweise Schrauben oder Klemmen, erforderlich. Dadurch sind die hohen Dichtigkeitsanforderungen jedoch nicht reproduzierbar und somit nicht prozesssicher, da beispielsweise für eine hohe Dichtigkeit die Schrauben stets einwandfrei angezogen sein müssen, damit kein Spalt und somit keine Undichtigkeit entsteht. Insbesondere dann, wenn die Blenden häufiger von den Messgeräten abgenommen werden, kann dieses spaltfreie Abdichten zunehmend weniger gewährleistet werden.
- Darüber hinaus wirken hier die Dichtkräfte und die Fügkräfte beim Aufstecken der Blende auf das Gehäuse in dieselbe Richtung. Zur Abdichtung müssen hier naturgemäß sehr viel höhere Dichtkräfte aufgebracht werden, als wenn die Kräfte nicht parallel wirken, zum Beispiel senkrecht aufeinander stehen.
- Darüber hinaus sind unerwünschte Toleranzen und Verzug beim Aufstecken der Blende auf das Messgeräte aufgrund der starken Geometrieabhängigkeit von Blende und Messgerät schlecht oder gar nicht ausgleichbar.
- Des Weiteren kann es vorkommen, dass aus Zeit- oder Bequemlichkeitsgründen oder mangels Werkzeug zur Befestigung der Befestigungsmittel die Verwendung eines derartigen Schutzgehäuses in den o. g. Fällen unterbleibt und das verwendete Messgerät nicht mehr auf die bequeme und vor allen Dingen zuverlässige Art und Weise in einer Spülmaschine gereinigt werden kann.

Eine wesentliche Randbedingung bei der Handhabung der genannten Messgeräte sind außerdem die geforderten hohen Hygieneanforderungen. Bei den oben angegebenen Einsatzbereichen der mit diesen Schutzgehäusen versehenen Messgeräte wurden verschiedene Reinigungsverfahren angewendet. Es hat sich gezeigt, dass die meisten Reinigungsverfahren, wie z. B. ein feuchter, noch unbenutzter Putzlappen, ein Einmaltuch, ein Reinigungsmittel (RIX), ein Reinigungsmittel mit anschließender alkoholischer Desinfektion die zu reinigenden Messgeräte mehr oder weniger gut reinigen, jedoch konnte eine vollständige, hundertprozentige Reinigung bei diesen Reinigungsverfahren nicht sichergestellt werden. Lediglich bei der Reinigung der Messgeräte in einer Spülmaschine für die Dauer von 45 Minuten bei einer Temperatur von 75 °C wurden sowohl bei fettfreier Verschmutzung als auch bei fetthaltiger Verschmutzung stets eine hundertprozentige Reinigungswirkung erzielt.

Um die gewünschten Hygieneanforderungen verlässlich zu erfüllen, ist es somit erstrebenswert, die Messgeräte einer Spülmaschinenreinigung zu unterziehen.

Die DE 298 20 206 U1 beschreibt ein elektronisches Fieberthermometer mit einem eine Steuerelektronik umgebenden Gehäuse. Das Gehäuse besteht aus einem transparenten Kunststoff und ist zweiteilig mit einem Hauptteil und einem Batteriedeckel ausgebildet. Nach Einbringen der Steuerelektronik in den Hauptteil werden der Hauptteil und der Batteriedeckel dauerhaft miteinander verschweißt, um eine Wasserdichtheit des Gehäuses zu gewährleisten.

Der Erfindung liegt die Aufgabe zugrunde, ein Bedien- und Anzeigegerät anzugeben, bei dem eine Auswerteschaltung wassergeschützt in einem Gehäuse angeordnet ist, bei dem die Auswerteschaltung jedoch aus dem Gehäuse ohne Zerstörung des Gehäuses herausnehmbar ist.

Erfindungsgemäß wird diese Aufgabe durch ein Bedien- und Anzeigegerät mit den Merkmalen des Anspruchs 1 gelöst. Demgemäß ist ein gattungsgemäßes Bedien- und Anzeigegerät vorgesehen, das ein einziges, einstückig ausgebildetes Gehäuse aufweist, das aus einem temperaturbeständigen Material besteht und das das Bedien- und Anzeigegerät nach außen hin wasserdicht abdichtet.

Die Erfindung basiert auf der Idee, die bisher verwendeten mehrstückigen zusätzlichen Schutzgehäuse quasi in einem Gehäuse für das Messgerät zu integrieren. Dieses Messgerät besitzt daher ein einziges, stoßfestes und wasserdichtes Gehäuse, das fester Bestandteil des Messgerätes ist. Dabei bestehen die Vorteile dieses Messgeräts in dessen günstigen Herstellungskosten, verglichen mit früheren, zweistückig oder mehrstückig ausgebildeten Messgeräten, welche zum Einsatz in feuchter Umgebungen ein wasserdichtes Gehäuse (Holster, Blende) benötigen wird.

Das einstückige Gehäuse ist in Bezug auf die Dichtigkeit auch sehr prozesssicher, da hier keine Schrauben verwendet werden, die einwandfrei angezogen werden müssen. Da das Gehäuse aus einem temperaturbeständigen Material besteht und nach außen hin wasserdicht abgeschlossen ist, eignet es sich auch zur Reinigung mit heißem Wasser von mindestens 75° C. Dadurch kann das Gehäuse auf einfache Weise in der Spülmaschine gereinigt werden, wodurch vorteilhafterweise eine größtmögliche Desinfektion sichergestellt ist.

Das erfindungsgemäße Anzeige- und Bediengerät gewährleistet jedoch nicht nur eine größtmögliche Wasserdichtigkeit, sondern es ist hier gleichzeitig auch ein sehr effektiver Rundumstoß- und Schmutzschutz realisiert.

Das Gehäuse passt sich aufgrund seiner Elastizität und seiner Form nahezu formschlüssig an die Form der Verblendung an. Dadurch kann kein Spalt zwischen Gehäuse und Verblendung entstehen, wodurch die erfindungsgemäße Anordnung auch den hohen geforderten Hygieneanforderungen genügt.

Für den Fall eines defekten Gehäuses und/oder eines defekten Messgerätes, lässt sich das Gehäuse auf sehr einfache Weise und nahezu ohne Werkzeuge vom Messgerät ablösen und gegebenenfalls durch ein neues Gehäuse ersetzen. Nach Überprüfung, gegebenenfalls Reparatur, lässt sich durch Austausch des Gehäuses vorteilhafterweise ein Messgerät bereitstellen, das optisch gesehen einen neuwertigen Eindruck hinterlässt.

Gemäß einer vorteilhaften Ausführungsform der Erfindung umhüllt das Gehäuse eine Verblendung, in der die Platine, das Anzeigenfeld, die Tastatur oder zumindest die kontaktempfindlichen Bereiche für die Tastatur aufgenommen sind. Diese Verblendung kann kastenförmig ausgebildet sein und an einer oder mehreren Seiten jeweils von einem Deckel verschlossen sein. Die Verblendung dient lediglich der Stützung sowie der Aufnahme der oben genannten Elemente des Messgerätes. In einer Minimalversion kann auf die Verblendung verzichtet werden, wenn beispielsweise das Gehäuse selbst die Stützfunktion übernimmt. In diesem Fall kann das Gehäuse eine oder mehr Stützstreben aufweisen.

Ein großer Vorteil des erfindungsgemäßen Gehäuses besteht auch darin, dass ohne Werkzeuge das Gehäuse auf die Verblendung aufgezogen werden kann und dennoch eine hohe Dichtigkeit erzielt wird. Dies ist insbesondere dann von Vorteil, wenn beispielsweise bei Vor-Ort-Messungen eine Reinigung des Messgerätes nicht möglich ist. In diesem Fall können beispielsweise mehrere saubere, dass heißt desinfizierte Gehäusehüllen mitgenommen werden und vor Ort mit den gebrauchten Gehäusehüllen ausgetauscht werden.

Der besondere Vorteil der vorliegenden Erfindung besteht insbesondere darin, dass die Richtungen von Fügkraft und Dichtkraft senkrecht aufeinander stehen. Zur Erzeugung einer hohen Dichtigkeit reichen hier vergleichsweise schon geringe Dichtkräfte, was den besonderen Vorteil mit sich bringt, dass bereits geringe Dichtflächen zur Abdichtung ausreichen. Da das Abdichten senkrecht zur Fügrichtung nahezu kraftfrei erfolgt, sind hier keine Befestigungselemente, wie Schrauben oder Klemmen, notwendig, was vorteilhafterweise Entwicklungs- und Fertigungszeit, Dichtflächen und somit Kosten für Befestigungsmaterial und Dichtmaterial einspart.

Die Dichtvorrichtung zwischen Verblendung und Gehäuse kann bevorzugt mittels einer umlaufenden Nut bzw. eines umlaufenden Steges erfolgen, die jeweils an der Verblendung oder an dem Gehäuse derart angebracht sind, dass beim Zusammenfügen der Verblendung mit dem Gehäuse der Steg in die Nut eingreift, wobei durch die Verwendung elastisch nachgebenden Materials in Verbindung mit einem zumindest geringfügigen Übermaß der Nut gegenüber dem Steg eine besonders gute Dichtwirkung zwischen beiden Teilen erreicht wird. Die Dichtwirkung der Dichtvorrichtung zwischen der Verblendung und dem Gehäuse kann durch das Anbringen von Dichtlippen an der Nut und/oder an dem Steg zusätzlich erhöht werden.

In einer weiteren Ausgestaltung der Dichtvorrichtung ist ein Stöpsel oder ein vorteilhafterweise durch Streben verstärkter Ring vorgesehen, der in das nach einer Seite offene Gehäuse eingeschoben wird. Dieser Ring bzw. Stöpsel kann an einem Deckel, an der Verblendung oder an dem Gehäuse befestigt sein. Besonders vorteilhaft ist es, wenn dieser Ring bzw. Stöpsel nach außen ragende spitze Stifte, Noppen, umlaufende Rippen oder Keile aufweist, die sich an der gegenüberliegenden Seite in das weichere Material der Ummantelung eingraben oder an das härtere Material durch Verformung anpressen und dadurch eine sehr gute Dichtwirkung erzielen. In diesen Fällen erzielen insbesondere auch zylinderförmig ausgestaltetet Ringe bzw. Stöpsel, die sich in Einschubrichtung leicht verjüngen, die beste Dichtwirkung.

Vorteilhafterweise weist die Dichtvorrichtung auch eine Einrasterkennung auf, die ein sicheres Einrasten des Steges in die Nut bzw. des Stöpsels oder des Ringes in das Gehäuse oder die Verblendung sicherstellt.

Als Gehäusewerkstoff kann je nach Anwendungszweck bzw. je nach Bedarf ein mehr oder weniger weicher Kunststoff, wie zum Beispiel ein Elastomer, verwendet werden, der zum einen die zum Abdichten und zum Schutz erforderliche, stoßabsorbierende Steifigkeit aufweist und zum anderen die für die Funktionalität der zu betätigenden Tasten erforderliche weiche Oberfläche bietet. Das Gehäuse besteht typischerweise zumindest zum Teil aus einem Werkstoff aus TPU, TPE oder PVC. Besonders vorteilhaft ist es, wenn als Gehäuse ein Spritzgussteil verwendet wird, das sehr einfach und kostengünstig herstellbar ist.

Bei Verwendung derartiger Materialien, beispielsweise Weich-PVC oder thermoplastisches TPU, lässt sich vorteilhafterweise ein vollständig transparentes Gehäuse bereitstellen. Es wäre jedoch auch möglich, das Gehäuse aus einem teiltransparenten Werkstoff besteht. Bei Verwendung von transparenten oder teiltransparenten Werkstoffen können nicht nur Zeichen im Anzeigenfeld und der Tastatur sondern auch Beschriftungen auf der Verblendung gut abgelesen werden.

Es ist aber auch möglich, das Gehäuse aus einem nicht transparenten, eingefärbten Werkstoff herzustellen. Hier kann im Bereich des Anzeigenfeldes ein transparentes Schutzglas vorgesehen sein.

Im einfachsten Fall kann das Gehäuse aus einem abgelengtem Kunststoffschlauch bestehen, der einen gleichen bzw. geringfügig größeren Durchmesser wie die Verblendung des Messgerätes aufweist. Zur Montage ist hier lediglich der Schlauch über das Messgerät zu stülpen und an den offenen Enden mit geeigneten Dichtvorrichtungen zu verschließen. Es ist hier lediglich erforderlich, dass der Schlauch ein geringfügiges Übermaß aufweist. Die für die Haftung erforderlichen Haltekräfte entstehen durch Adhäsion des Übermaß aufweisenden Schlauches auf der Verblendung. Bei Verwendung eines Schlauches sind vorteilhafterweise nahezu keine Werkzeugkosten erforderlich.

Gemäß einer weiteren Ausführungsform der Erfindung ist es möglich, dass das Gehäuse in dem Bereich der Tastatur eine den Tastfeldern entsprechende Anzahl von Stößeln aufweist, die sich über die Oberfläche des Gehäuses nach außen abheben. Des Weiteren ist es möglich, dass der Bedienbereich bzw. die Tastatur des Messgerätes aus einem Gehäuseabschnitt verringerter Wanddicke besteht. Dabei ist es vorteilhaft, den Bedienbereich einstückig mit dem Gehäuse aus demselben Material zu fertigen.

Eine weitere Ausführungsform sieht vor, vorzugsweise auf einer dem Bedienbereich bzw. der Tastatur abgewandten Seite Aussparungen vorzusehen, die der Befestigung des Gerätes an einer zugehörigen Halterung dienen können. Um eine erhöhte Verwendungssteifigkeit des Gehäuses und damit eine verbesserte Handhabbarkeit zu erreichen, ist bei einer weiteren Ausführungsform des Gerätes mindestens eine Verstärkungsleiste vorgesehen, die aus demselben Material wie das Gehäuse besteht. Die Verstärkungsleiste bietet ferner einen erhöhten Schutz der im Inneren der Verblendung aufgenommenen Platine vor von außen einwirkender Krafteinwirkung.

Die Dichtwirkung im Bereich einer Öffnung kann besonders einfach dadurch sichergestellt sein, dass die Form und Größe der Öffnung derart an die Formen und Größe des Steckers angepasst sind, so dass das Gehäuse im Bereich der Öffnung vollflächig und damit wasserdichtend am Stecker anliegt. Eine weitere Ausführungsform sieht vor, eine Dichtlippe in der Öffnung anzubringen, die an dem hindurchgeführten Stecker umlaufend Linienberührung hat und damit wasserdichtend anliegt. Diese Variante hat den Vorteil, dass der Stecker mit geringem Kraftaufwand durch die Öffnung hindurchgeführt werden kann. Selbstverständlich kann diese Öffnung bei Nichtverwenden eines Steckers mit einer entsprechenden Kappe verschlossen werden.

Weitere vorteilhafte Ausgestaltungen und Weiterbildungen der Erfindung sind den Unteransprüchen und der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:
- Figur 1: in einer Querschnittsdarstellung ein erstes Ausführungsbeispiel eines erfindungsgemäßen Messgerätes mit einer Detaildarstellung X der Dichtung;
- Figur 2: eine Detaildarstellung des Anzeigebereiches und des Tastenbereiches eines zweiten Ausführungsbeispiels eines erfindungsgemäßen Messgerätes;
- Figur 3: ein drittes Ausführungsbeispiel eines erfindungsgemäßen Messgerätes im Querschnitt;
- Figur 4: ein viertes Ausführungsbeispiel eines erfindungsgemäßen Messgerätes im Querschnitt;
- Figur 5: in einer Detaildarstellung eine weitere Dichtvorrichtung für elastisch ausgebildetes Gehäuse;
- Figur 6: ein weiteres vorteilhaftes Ausführungsbeispiel einer Dichtvorrichtung für ein Gehäuse.

In den nachfolgenden Figuren sind, sofern nichts anderes angegeben ist, gleiche oder funktionsgleiche Elemente und Teile mit gleichen Bezugszeichen bezeichnet worden.

Die Beschreibung verschiedener Ausführungsbeispiele erfolgt nachfolgend anhand von Messgeräten 10, 110, 210 und 310. Die Erfindung soll jedoch nicht auf solche Messgeräte eingeschränkt sein. Es ist vielmehr selbstverständlich, dass die beschriebenen Merkmale auch für Bedien- und/oder Anzeigegeräte jeglicher Art verwendet werden können.

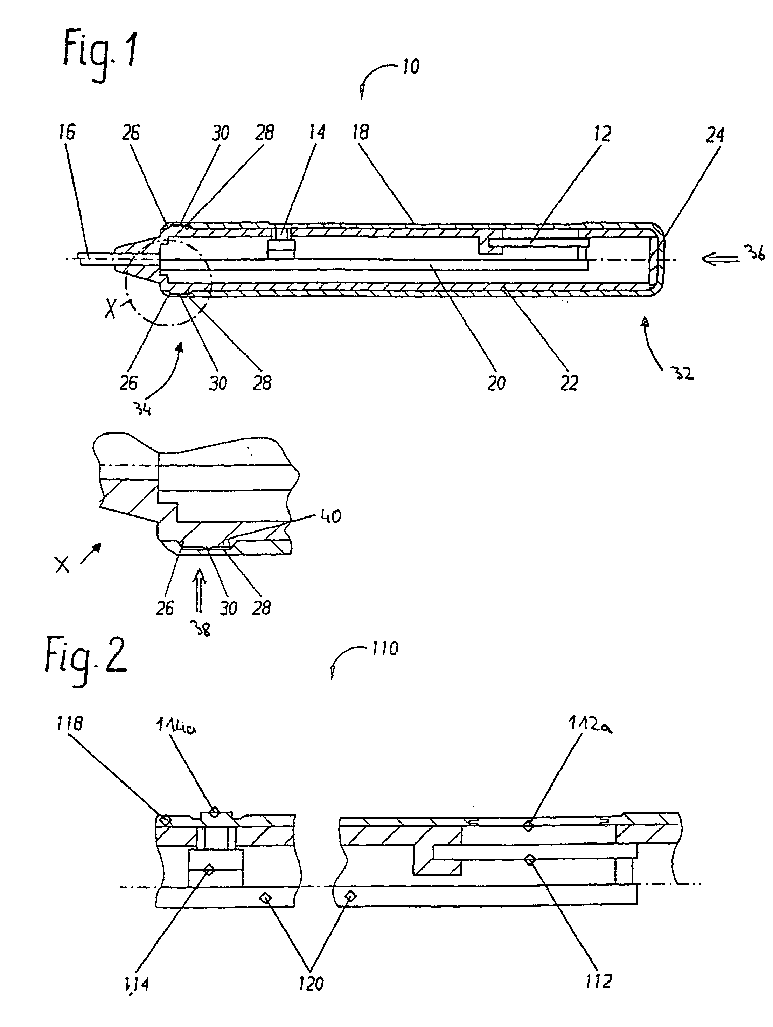

In Figur 1 ist in einer Querschnittsdarstellung ein erstes Ausführungsbeispiel eines erfindungsgemäßen Messgerätes 10 dargestellt. Das Messgerät 10 weist in dem dargestellten Beispiel ein einziges Gehäuse 18 auf, das bezogen auf den Querschnitt im Wesentlichen U-förmig ausgebildet ist und das eine ebenfalls im Wesentlichen U-förmig ausgebildete Verblendung 22 derart aufnimmt, dass das nach einer Seite offene Ende der Verblendung 22 sich an der Basis 32 des Gehäuses 18 befindet. Das nach einer Seite offene Ende der Verblendung 22 ist über einen Deckel 24 verschlossen. An der dem Deckel 24 bzw. der Basis 32 abgewandten Seite der Verblendung 22 ragt ein Messwertaufnehmer 16 aus der Verblendung 22 heraus. Im vorliegenden Ausführungsbeispiel ist der Messwertaufnehmer 16 als Sondenrohr zur Temperaturmessung ausgebildet, jedoch kann der Messwertaufnehmer 16 auch auf beliebig andere Weise ausgebildet sein, beispielsweise als Feuchtigkeitsmesssonde, Strom-, Spannungs-, Widerstandsmesssonde, Druckmessumformer, etc.

Innerhalb der Verblendung 22 ist eine Platine 20 vorgesehen, die ein Anzeigenfeld 12 aufweist und die über kontaktempfindliche Bereiche auf der Platine 20 mit einer Tastatur 14 gekoppelt ist.

Das Anzeigenfeld 12 kann beispielsweise als Display ausgebildet sein, welche über elektrische Steuersignale, die beispielsweise von einer auf der Platine angeordneten integrierten Schaltung in Verbindung mit einem Analog-Digital-Wandler bereitgestellt werden, angesteuert wird. Die Tastatur 14 besteht typischerweise aus einer Vielzahl von einzelnen Tasten, kann jedoch im Minimalfall auch eine einzige Taste aufweisen. Die Tasten der Tastatur 14 können noppenartig ausgebildet sein. Über kontaktempfindliche Kontaktpunkte auf der Platine 20 wird bei Kontakt einer Taste mit einem Kontaktpunkt ein elektrisches Signal erzeugt, welches einer auf der Platine 30 angeordneten integrierten Schaltung - beispielsweise einem Prozessor oder einer Logikschaltung - zugeführt wird. In Abhängigkeit der so eingekoppelten Signale erzeugt die integrierte Schaltung die Ansteuersignale zur Ansteuerung des Anzeigenfeldes 12.

Im vorliegenden Ausführungsbeispiel gemäß Figur 1 besteht das Gehäuse 18 aus einem vollständig transparenten oder zumindest teilweise transparenten Werkstoff. Als zumindest teilweise transparente Werkstoffe werden solche Werkstoffe bezeichnet, die zwar (leicht) eingefärbt sind, jedoch von außen noch durchsichtig sind, so dass Zeichen innerhalb des Gehäuses 18 erkennbar sind. Wenn nachfolgend von einem transparenten Gehäuse 18 bzw. von einer transparenten Verblendung 22 die Rede ist, bezieht sich dies stets auch auf solche zumindest teilweise transparente Gehäuse 18 bzw. Verblendungen 22.

Da das Gehäuse 18 in Figur 1 vollständig transparent ausgebildet ist, ermöglicht es einen visuellen Zugang auf das Anzeigenfeld 12 sowie auf die Tastatur 14. Symbole, Buchstaben oder Ziffern im Anzeigenfeld 12 sowie auf den Tasten der Tastatur 14, jedoch auch solche Bezeichnungen, die auf der Verblendung aufgedruckt sind und beispielsweise Herstellerbezeichnungen wiedergeben, sind durch das Gehäuse 18 hindurch von außen sichtbar.

Das (transparente) Gehäuse 18 und/oder die Verblendung 22 besteht typischerweise aus einem Kunststoff, der beispielsweise aus einem zumindest teilweise TPU, TPE, PVC oder ähnliche Werkstoffe enthalten Werkstoff besteht. Besonders vorteilhaft ist es, wenn das Gehäuse 18 spritzgegossen ist. Wesentlich hierbei ist lediglich, dass das Gehäuse 18 und die Verblendung 22 aus einem temperaturbeständigen Material, dass heißt für Temperaturen größer als 70° C angelegt ist, gefertigt ist und somit für eine Reinigung in der Spülmaschine geeignet ist.

Wie aus Figur 1 entnehmbar ist, umhüllt das Gehäuse 18 die Verblendung 22 im Wesentlichen formschlüssig und lässt lediglich einen Basisbereich 34 der Verblendung 22 frei. Diese im Wesentlichen formschlüssige Verbindung von Gehäuse 18 und Verblendung 22 wird dadurch erreicht, dass entweder das Gehäuse 18 in die durch Bezugszeichen 36 angegebene horizontale Richtung in die Verblendung 22 geschoben wird oder umgekehrt. Diese im Wesentliche formschlüssige und somit sehr straffe Ummantelung gewährleistet für sich schon eine sehr gute Dichtigkeit, die allein jedoch den strengen Hygieneanforderungen bzw. die geforderte hohe Dichtigkeit des Messgerätes 10 nicht bzw. nur bedingt gewährleistet.

Aufgrund dessen weist das erfindungsgemäße Messgerät 10 eine Dichtvorrichtung 26, 28, 30 auf, die nahe an dem nach einer Seite offenen Ende des U-förmigen Gehäuses 18 bzw. den entsprechenden Bereichen der Verblendung 22 in der Nähe der Basis 34 angeordnet ist. Die Dichtvorrichtung 26, 28, 30 weist einen in der Nähe der Basis 34 der Verblendung 22 angeordneten umlaufenden Steg 26 auf, der in eine, nahe der offenen Enden des U-förmigen Gehäuses 18 entsprechenden ausgeformten Nut 28 eingreift.

Zur Erhöhung der Dichtwirkung ist es besonders vorteilhaft, wenn der umlaufende Steg 26 zusätzlich eine umlaufende Dichtlippe 30 aufweist, die in engem Berührungskontakt mit der Nut 28 des Gehäuses 18 steht. Vorteilhafterweise ist die Dichtlippe 30 spitz oder noppenartig ausgestaltet, so dass sie sich in die entsprechenden Bereiche der Nut 28 eingraben kann, wodurch eine hohe Dichtwirkung erzielbar ist. Vorteilhafterweise weist - je nachdem wie breit der Steg 26 bzw. die Nut 28 ausgestaltet sind - die Dichtvorrichtung 26, 28, 30 eine Vielzahl von solchen spitzen oder noppenartigen Dichtlippen 30 auf, wodurch die abdichtende Wirkung der Dichtvorrichtung 26, 28, 30 noch gesteigert werden kann. Alternativ kann die Dichtlippe 30 auch als eine oder mehrere ringförmig um den Steg 26 umlaufende, keilförmige oder rippenförmige Dichtung ausgebildet sein.

Die Dichtlippe 30 kann zum einen aus einem härteren Material als die gegenüberliegende Nut 28, in die sie sich eingräbt, bestehen. Alternativ wäre es auch denkbar, dass die Dichtlippe 30 aus einem weicheren Material als die Nut 28 besteht und durch einen entsprechenden Presskontakt bzw. durch Verformung die gewünschte Dichtigkeit erzeugt.

Selbstverständlich wäre es auch denkbar, die Anordnung der Nut 28 und des Steges 26 an dem Gehäuse 18 bzw. der Verblendung 22 miteinander zu vertauschen.

Besonders vorteilhaft ist es, wenn der Steg 26 und/oder die Dichtlippe 30 eine Einrastvorrichtung 40 aufweisen, so dass gewährleistet werden kann, dass der Steg 26 ordnungsgemäß auf den für ihn vorgesehenen Bereich der Nut 28 aufliegt.

Durch die spezielle Anordnung der Dichtvorrichtung 26, 28, 30 wird gewährleistet, dass die in Figur 1 mit Bezugszeichen 38 dargestellt Richtung der Dichtkräfte senkrecht, d. h. im Wesentlichen in einem Winkel von 90°, zu der Richtung 36 der Fügkräfte steht. Aufgrund der senkrecht aufeinander stehenden Dichtkraft- und Fügkraftrichtung ist zur Erlangung einer hohen Dichtwirkung eine im Vergleich zu parallel zueinander verlaufenden Dichtkraft- und Fügkraftrichtungen flächenmäßig geringere Abdichtung erforderlich.

Figur 2 zeigt in einer Detaildarstellung den Anzeigebereich und den Tastenbereich eines zweiten Ausführungsbeispiels eines erfindungsgemäßen Messgerätes im Querschnitt. Dabei werden für gleiche bzw. funktionsgleiche Elemente und Teile gleiche, jedoch im Vergleich zu Figur 1 um 100 erhöhte Bezugszeichen verwendet.

Das in dem Teilquerschnitt in Figur 2 gezeigte Messgerät 110 enthält ebenfalls ein Gehäuse 118, das ein Anzeigenfeld 112, eine Tastatur 114, eine Platine 120 und eine Verblendung 122 aufweist.

Das Gehäuse 118 weist im Bereich des Bedienfeldes Stößel 114a auf, die jeweils einem Taster der Tastatur 114 zugeordnet sind. Diese Stößel 114a erheben sich über den äußeren Bereich des Gehäuses 118 heraus. Um ein vereinfachtes Betätigen der Tastatur 114 zu gewährleisten, weist das Gehäuse 118 im Bereich der Tastatur 114 bzw. am Rand der Stößel 114a vorteilhafterweise eine verringerte Wanddicke auf, so dass dieser Bereich des Gehäuses 118 beispielsweise mit einer Fingerspitze oder einem Stift zur Betätigung der Tasten elastisch leicht verformt werden kann.

Im Gegensatz zu dem ersten Ausführungsbeispiel gemäß Figur 1 ist in einer Minimalversion das Gehäuse 118 lediglich im Bereich der Tastatur 114 und/oder des Anzeigenfeldes 112 transparent. Die übrigen Bereiche des Gehäuses 118 bestehen hier aus einem farbigen, lichtundurchlässigen Werkstoff. Das Gehäuse 118 enthält im Bereich des Anzeigenfeldes 112 jedoch ein transparentes Schutzglas 112a, das fest in dem Gehäuse 118 aufgenommen ist.

Die übrigen Bauteile des Ausführungsbeispiels gemäß Figur 2 stimmen mit denjenigen des Ausführungsbeispiels gemäß Figur 1 überein, so dass eine weitere Beschreibung dieser Bauteile zur Vermeidung einer Wiederholung nicht mehr erforderlich ist.

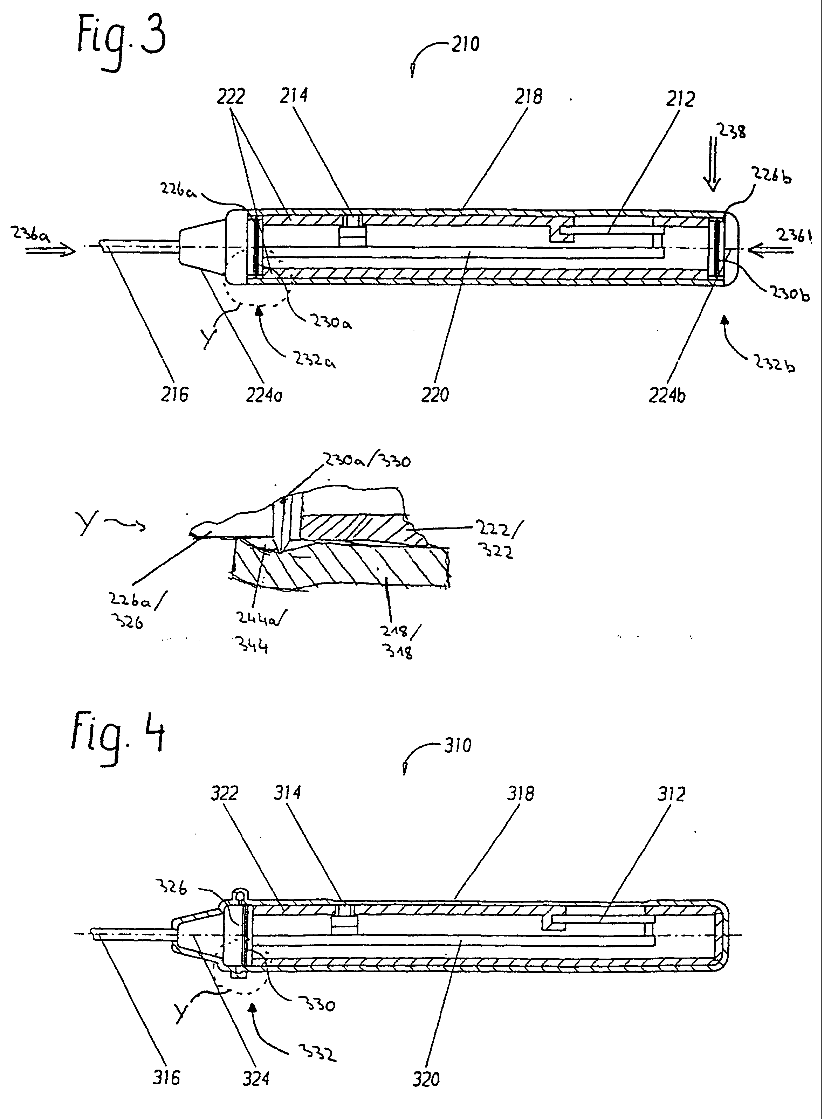

In Figur 3 ist ein drittes Ausführungsbeispiel eines erfindungsgemäßen Messgerätes 210 dargestellt. Dabei werden für gleiche bzw. funktionsgleiche Elemente und Teile gleiche, jedoch im Vergleich zu Figur 1 um 200 erhöhte Bezugszeichen verwendet.

Der wesentliche Unterschied zu den vorstehend beschriebenen Ausführungsbeispielen besteht darin, dass das Gehäuse 218 mit einander entgegengesetzt angeordneten offenen Stirnbereichen 232a, 232b versehen ist. Diese Stirnbereiche 232a, 232b werden von zwei Deckeln 224a, 224b verschlossen. Dabei kann bei dem einen Deckel 224a auch noch ein Messwertaufnehmer 216 angeordnet werden. Des Weiteren enthält auch dieses Messgerät 210 die schon oben beschriebenen Bestandteile, nämlich ein Anzeigenfeld 212, eine Tastatur 214, eine Platine 220 und eine Verblendung 222.

In Figur 3 sind die Stirnbereiche 232a, 232b des Gehäuses 218 über Dichtvorrichtungen abgedichtet. Die Dichtvorrichtungen, die hier das Gehäuse 218 zu den beiden Deckeln 224a, 224b hin abdichten, bestehen jeweils aus einem festen Ring 226a, 226b, die beispielsweise an einem Deckel 224a, 224b befestigt sind. Diese festen Ringe 226a, 226b sind derart ausgelegt, dass sie sich, wenn ein Ring 226a, 226b in das Gehäuse 218 geschoben wird, in die weichere Ummantelung des Gehäuses 218 eingräbt, wodurch eine gute Dichtwirkung erzielt wird.

Besonders vorteilhaft ist es, wenn ein Ring 226a, 226b zylinderförmig derart ausgebildet ist, dass er sich in Einschubrichtung leicht verjüngt. Wird dieser Ring 226a, 226b über den Deckel 224a, 224b in das Gehäuse 218 hineingeschoben, dann kann schon bei einem geringfügigen Druck in die Richtung 236a, 236b eine sehr hohe Dichtwirkung erzielt werden.

Besonders vorteilhaft ist es, wenn zumindest ein Ring 226a, 226b eine in der Figur nicht gezeigte Stützvorrichtung 230, zum Beispiel Stützstreben oder Stützstifte, aufweist, die die Stabilität des Ringes 226a, 226b aufrechterhalten und somit gewährleisten, dass sich der Ring 226a, 226b auch wirklich in die weichere Ummantelung des Gehäuses 218 pressen lässt und nicht seinerseits von der Ummantelung eingedrückt wird. Besonders vorteilhaft ist es in diesem Zusammenhang, wenn zumindest ein Ring 226a, 226b ähnlich wie im Ausführungsbeispiel gemäß Figur 1 mindestens eine umlaufende Dichtlippe - oder Feder 230a, 230b aufweist, die spitz ausgestaltet sind und sich beim Einführen eines Ringes 226a, 226b in die Richtungen 236a, 236b gleichzeitig in der Richtung 238 in das Gehäuse 218 eingraben kann (siehe hierzu Detaildarstellung Y). Vorteilhafterweise ist eine Vertiefung 244a im Gehäuse 218 vorgesehen, in die sich die Dichtlippe 230a, 230b eingraben kann. Auf diese Weise kann quasi das Einrasten der Dichtlippe 230a, 230b in das Gehäuse sichergestellt werden. Es wäre jedoch auch denkbar, wenn an der äußeren Umfangfläche eines Ringes 226a, 226b umlaufende rippen-, noppen- oder keilförmige Bereiche vorgesehen sind, die sich ähnlich wie die eben beschriebenen spitz ausgestalteten Dichtlippen oder Federn 230a, 230b beim Einschieben des Ringes 226a, 226b in die Ummantelung des Gehäuses 218 in eben dieses eingräbt.

Auf besondere konstruktive Ausgestaltungen und Maßnahmen der Ummantelung des Gehäuses 218 im Beispiel in Figur 3 kann verzichtet werden, so dass hier als Gehäuse 218 im einfachsten Fall auch ein Schlauch, beispielsweise ein PVC-Schlauch, verwendet werden kann.

Schließlich ist in Figur 4 ein viertes Ausführungsbeispiel eines erfindungsgemäßen Messgerätes 310 dargestellt. Die verwendeten Bezugszeichen entsprechen denjenigen der Figur 1, sie sind allerdings um 300 erhöht.

Im Unterschied zur Figur 1 weist ein in Figur 4 gezeigtes Gehäuse 318 eine U-förmige Gestalt auf, wird aber an der offenen Seite 332 von einem Deckel 324 verschlossen. Dieser Dekkel 324 ist an einem freien Ende des Gehäuses 318 schwenkbar an diesem angeschlossen. Er kann zwar aus einem anderen Material als das Gehäuse 318 bestehen, allerdings ist es vorteilhaft, wenn Deckel 324 und Gehäuse 318 aus dem selben Material bestehen, da bei einer Materialgleichheit der Herstellungsprozess erleichtert wird.

Ferner enthält auch dieses Messgerät 310 die bereits beschriebenen Bestandteile, nämlich ein Anzeigenfeld 312, eine Tastatur 314, eine Platine 320 und eine Verblendung 322.

In Figur 4 ist ebenfalls eine Dichtvorrichtung auf der nach einen Seite offenen Seite 332 des Gehäuses 310 vorgesehen. Die Dichtvorrichtung, die hier Bestandteil der Verblendung 322 ist, weist nahe der Stirnseite der Verblendung 322 einen mit der Verblendung 322 verbundenen Stöpsel 326 auf. Der Stöpsel 326 weist hier, äquivalent zu Figur 3, eine oder vorteilhafterweise auch mehrere spitze oder keilförmig umlaufende Dichtfedern oder Dichtlippen 330 auf, die sich bei Überstülpen des Gehäuses 318 über die Verblendung 322 in eben dieses Gehäuse 318 eingraben und somit eine sehr hohe Dichtwirkung erzielen (siehe hierzu Detaildarstellung Y). Vorteilhafterweise ist auch hier eine Vertiefung 344 im Gehäuse 318, in die sich die Dichtlippe 330 eingraben kann, vorgesehen. Denkbar wäre auch, wenn der Stöpsel 326 mit den umlaufenden Dichtfedern bzw. Dichtlippen 330 nicht mit der Verblendung 322 verbunden sind, sondern von außen in das Gehäuse 318 aufsteckbar sind.

In allen Figuren ist als Verblendung 22, 122, 222, 322 ein inneres Stützgestell vorgesehen, welches zur Aufnahme der funktionalen Elemente, wie beispielsweise der Platine, des Anzeigenfeldes, der Tastatur, der (nicht dargestellten Strom/Spannungsversorgung) dient. Wesentlich ist hier, dass die Verblendung nicht als Gehäuse anzusehen ist. Vielmehr wird die Gehäusefunktion - wie oben ausführlich beschrieben wurde - ausschließlich durch das mit den Bezugszeichen 18, 118, 218, 318 bezeichnete Gehäuse erfüllt. Die Verblendung muss, auch wenn dies in den Querschnitten der Figuren 1 - 4 den Anschein erwecken mag, keineswegs wasserdicht ausgebildet sein und somit den hohen geforderten Hygieneanforderungen gerecht werden. Die Verblendung dient lediglich der Stabilität des Messgerätes und muss je nach Anwendungsbereich ausreichend stabil konstruiert sein. Vorteilhafterweise bildet die Verblendung auch eine in sich stabile Einheit, dass heißt die Verblendung ist beispielsweise verklebt, geklemmt, verschraubt, etc. und bildet damit auch ohne das Gehäuse eine zwar undichte, jedoch funktionsfähige Einheit. Diese Mindestanforderung ist insbesondere dort von Vorteil, wo die eingangs genannten strengen Hygiene- bzw. Dichtigkeitsanforderungen nicht erforderlich sind.

Aus Stabilitätsgründen ist es auch vorteilhaft, wenn das Gehäuse mindestens eine ebenfalls nicht dargestellte Verstärkungsleiste aufweist, die aus demselben Material wie das Gehäuse besteht. In diesem Fall könnte sogar auf eine Verblendung ganz verzichtet werden.

Das erfindungsgemäße Messgerät weist typischerweise eine in den Figuren nicht dargestellte Strom/Spannungsversorgung auf. Diese Strom/Spannungsversorgung kann bei tragbaren Messgeräten beispielsweise durch eine gängige Batterie bzw. ein Akku ausgebildet sein.

In sämtlichen Figuren 1 - 4 wurden Messgeräte dargestellt, die jeweils ein als Display ausgebildetes Anzeigenfeld sowie ein als Tastatur ausgebildetes Bedienfeld enthalten. Es wäre jedoch auch denkbar, dass die erfindungsgemäßen Messgeräte lediglich ein Anzeigenfeld, jedoch keine Tastatur oder umgekehrt aufweisen. Alternativ wäre es auch denkbar, dass statt eines optisch ausgebildeten Anzeigenfeldes ein akustisches vorgesehen ist, das Messsignale beispielsweise durch einen Summton übermittelt.

Obwohl in den Figuren nicht dargestellt, kann das Messgerät vorzugsweise auf der dem Bedienbereich bzw. der Tastatur abgewandten Seite Aussparungen zum Befestigen an einer zugehörigen Halterung aufweisen.

Ferner ist es möglich, in dem Gehäuse eine Öffnung vorzusehen, durch die ein Stecker wasserdicht hindurchgeführt werden kann. Dabei können Form und Größe der Öffnung derart an Form und Größe des Steckers angepasst sein, dass der Stecker im Bereich der Öffnung wasserdichtend am Gehäuse anliegt. Außerdem kann die Öffnung eine Dichtlippe enthalten, die an dem hindurchgeführten Stecker wasserdichtend anliegt. Diese Öffnung kann bei Nichtgebrauch eines Steckers mit einem Deckel wasserdichtend abgeschlossen werden.

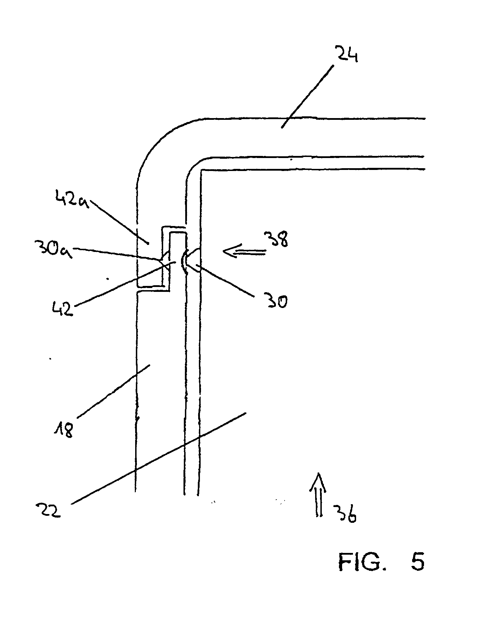

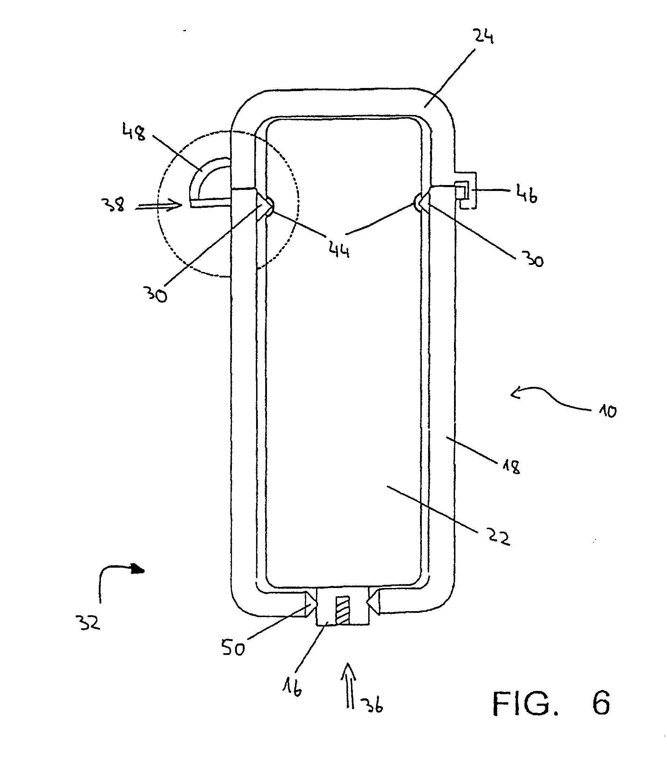

In Erganzung zu den in den Figuren 1, 3 und 4 beschriebenen Dichtvorrichtungen werden nachfolgend anhand der Figuren 5 und 6 noch zwei weitere Ausführungsbeispiele für Dichtvorrichtungen zur Abdichtung eines Gehäuses beschrieben. In den Figuren 5 und 6 sind gleiche bzw. funktionsgleiche Elemente entsprechend Figur 1 mit gleichen Bezugszeichen versehen.

Figur 5 zeigt in einer Detaildarstellung eine weitere Dichtvorrichtung für ein im vorliegenden Ausführungsbeispiel elastisch ausgebildetes Gehäuse 18. Das Gehäuse 18 ist an seiner offenen Seite durch einen Deckel 24, der zumindest teilweise über das Gehäuse schiebbar ist, verschließbar. Die so ineinander geschobenen Gehäuse 18 bzw. Deckel 24 umschließen die Verblendung 22 vollständig. Damit Gehäuse 18 und Deckel 24 ineinander geschoben werden können, weisen sie - weitestgehend passgenau - jeweils an ihren offenen Enden abgestufte Bereiche 42, 42 a auf.

Wird das Gehäuse 18 also über die Verblendung 22 geschoben, dann gräbt sich die Dichtlippe 30 nahe am offenen Ende des Gehäuses 18 in die Ummantelung des Gehäuses 18 ein. Zur Herstellung einer dichten Verbindung zwischen Gehäuse 18 und Deckel 24 ist eine weitere umlaufende Dichtlippe 30a vorgesehen, die im Ausführungsbeispiel gemäß Figur 5 in dem abgestuften Bereich 42 des Gehäuses 18 angeordnet ist. Wird also der Deckel 24 über das Gehäuse 18 geschoben, dann plättet sich die Dichtlippe 30a gegenüber dem härteren Deckel 24. Damit wird mithin auf sehr einfache, jedoch sehr effektive Weise eine Abdichtung bei einem nach einer Seite offenen Gehäuse 18 mit gewährleistet.

Die Dichtlippen 30, 30a können hier äquivalent wie in Figur 1 spitz, noppenförmig, keilförmig oder rippenförmig ausgebildet sein.

Die Dichtlippe 30 dient neben der Abdichtung auch der Fixierung des Gehäuses 18 relativ zur Verblendung 22. Sollte eine derartige Fixierung nicht erforderlich sein, könnte auf die Dichtlippe 30 auch verzichtet werden, so dass die Abdichtung des Gehäuses nach außen hin allein durch die Dichtlippe 30a sichergestellt wird. Ferner wäre auch denkbar, den Deckel 24 wegzulassen, wenn der entsprechende Bereich des Messgerätes nicht geschützt werden muss bzw. nicht wasserempfindlich ist. In diesem Falle wäre jedoch die umlaufende Dichtlippe 30 zur Abdichtung des restlichen Teiles des Messgerätes zwingend notwendig.

Figur 6 zeigt ein weiteres vorteilhaftes Ausführungsbeispiel zur Abdichtung eines Gehäuses.

Figur 6 zeigt ebenfalls ein Gehäuse 18 und einen das Gehäuse 18 verschließenden Deckel 24. Im Gegensatz zu Figur 5 ist jedoch in Figur 6 die Dichtlippe 30 zur Abdichtung des Gehäuses 18 gegenüber der Verblendung 22 an dem Gehäuse 18 selbst angebracht. Zusätzlich ist hier in der Verblendung 22 in dem Bereich, in dem die Dichtlippe 30 eingreifen bzw. sich eingraben soll, eine Vertiefung 44 vorgesehen

Im Gegensatz zum Ausführungsbeispiel in Figur 5 sind in Figur 6 die offenen Enden des Gehäuses 18 und des Deckels 24 nicht abgestuft, sondern stoßen mehr oder weniger "blank" gegeneinander. Der Deckel 24 ist hier über eine Scharniervorrichtung 46 an das Gehäuse 18 gekoppelt, wobei vorteilhafterweise zusätzlich eine Verriegelungsvorrichtung 48 vorgesehen ist, die ein Verschließen von Gehäuse 18 und Deckel 24 sicherstellt.

An der Basis 32 des Gehäuses 18 ragt äquivalent zu dem Ausführungsbeispiel in Figur 1 ein mit der Verblendung 22 verbundener Messwertaufnehmer 16 aus einer Öffnung des Gehäuses 18 heraus. Im Bereich der Öffnung weist das Gehäuse 18 weitere Dichtlippen 50 auf, die sich an dem Material des Messwertaufnehmers 16 plättet und somit auch im Bereich der Öffnung eine wasserdichtende Verbindung von Gehäuse 18 und Messwertaufnehmer 16 gewährleistet.

Zusammenfassend kann festgestellt werden, dass bei dem wie beschrieben aufgebauten erfindungsgemäßen Anzeige- und Bediengerät ein im Vergleich zum Stand der Technik sehr viel geringerer konstruktiver Aufwand erforderlich ist, aber nichts desto trotz eine höhere Dichtwirkung bei gleicher Dichtfläche erzielbar ist, ohne dass gleichzeitig die Nachteile von Anzeige- und Bediengeräten nach dem Stand der Technik in Kauf genommen werden müssen.

Das vorliegende erfindungsgemäße Anzeige- und Bediengerät wurde anhand der vorstehenden Beschreibung so dargelegt, um das Prinzip der Erfindung und dessen praktische Anwendung am besten zu erklären. Selbstverständlich lässt sich das erfindungsgemäße Verfahren im Rahmen des fachmännischen Handelns in geeigneter Weise in mannigfaltiger Art und Weise abwandeln.

### Bezugszeichenliste

- 10: Messgerät
- 12: Anzeigenfeld
- 14: Tastatur
- 16: Messwertaufnehmer, Sondenrohr
- 18: Gehäuse
- 20: Platine
- 22: Verblendung
- 24: Deckel
- 26: Steg
- 28: Nut
- 30, 30a: Dichtlippe
- 32: Basis des Gehäuses
- 34: Basis der Verblendung
- 36: Richtung der Fügkräfte
- 38: Richtung der Dichtkräfte
- 40: Einrastvorrichtung
- 42, 42a: abgestufter Bereich (des Gehäuse/Deckels)
- 44: Vertiefung
- 46: Scharniervorrichtung
- 48: Verriegelungsvorrichtung
- 50: weitere Dichtlippe

- 110: Messgerät
- 112: Anzeigenfeld
- 112a: Schutzglas
- 114: Tastatur
- 114a: Stößel
- 118: Gehäuse
- 120: Platine

- 210: Messgerät
- 212: Anzeigenfeld
- 214: Tastatur
- 216: Messwertaufnehmer, Sondenrohr
- 218: Gehäuse
- 220: Platine
- 222: Verblendung
- 224a, b: (Gehäuse-)Deckel
- 226a, b: Ring
- 230a, b: Dichtlippen, Dichtfeder
- 232a, b: offene Stirnbereiche des Gehäuses
- 236a, b: Richtung der Fügkräfte
- 238: Richtung der Dichtkräfte
- 244a: Vertiefung

- 310: Messgerät
- 312: Anzeigefeld
- 314: Tastatur
- 316: Messwertaufnehmer/Sondenrohr
- 318: Gehäuse
- 320: Platine
- 322: Verblendung
- 324: Deckel
- 326: Stöpsel
- 330: Dichtlippe, Dichtfeder
- 332: offene Seite
- 344: Vertiefung

- X: Detaildarstellungen von Figur 1
- Y: Detaildarstellungen von Figur 3 und 4

## Patentansprüche

1. Tragbares elektrisches Bedien- und Anzeigegerät mit einem Anzeigenfeld (12), mit einer Tastatur (14) mit mindestens einem Tastenfeld und mit einem einzigen, einstückig ausgebildeten Gehäuse (18), das aus einem temperaturbeständigen Material besteht und das das Bedien- und Anzeigegerät (10) nach außen hin wasserdicht abdichtet,
**dadurch gekennzeichnet,**
**dass** eine Verblendung (22, 122, 222, 322) zur Aufnahme des Anzeigenfeldes (12), der Tastatur (14) und einer Platine (20) und zur Stützung des Gehäuses (18, 118, 218, 318) und mindestens eine Dichtvorrichtung (26, 28, 30, 226a, 226b, 230a, 230b, 326, 330), die das Gehäuse (18) und die Verblendung (22, 122, 222, 322) nach außen hin wasserdicht abschließt, vorgesehen ist, wobei die wenigstens eine Dichtvorrichtung wenigstens eine an der Verblendung (322) oder an einem Stöpsel (326) oder Deckel (224a, 224b) angeordnete Dichtlippe (30, 330, 230a) aufweist, die sich beim Zusammenfügen der Verblendung (22) und des Gehäuses (18) oder des Stöpsels (326) oder Deckels (224) und des Gehäuses (318, 218) in das Gehäuse (318, 218) eingräbt, oder wobei die wenigstens eine Dichtvorrichtung eine umlaufende Nut (28) und einen hierzu passenden umlaufenden Steg (26) aufweist, die jeweils an gegenüberliegenden Stellen der Verblendung (22) und des Gehäuses (18) derart angeordnet sind, dass beim Zusammenfügen des Gehäuses (18) und der Verblendung (22) der Steg (26) in die Nut (28) eingreift.

2. Bedien- und Anzeigegerät nach Anspruch 1,
**dadurch gekennzeichnet,**
**dass** das Gehäuse (18) aus einem einzigen spritzgegossenen, thermoplastischen Werkstoff besteht.

3. Bedien- und Anzeigegerät nach einem der vorstehenden Ansprüche,
**dadurch gekennzeichnet,**
**dass** das Gehäuse (18) zumindest zum Teil einen Werkstoff aus TPU, TPE, PVC enthält.

4. Bedien- und Anzeigegerät nach einem der vorstehenden Ansprüche,
**dadurch gekennzeichnet,**
**dass** das Gehäuse (18) und die Verblendung (22) eine gleiche Form aufweisen und das Gehäuse (18) die Verblendung (22) im Wesentlichen formschlüssig umhüllt.

5. Bedien- und Anzeigegerät nach einem der vorstehenden Ansprüche,
**dadurch gekennzeichnet,**
**dass** das Gehäuse (118) ein transparentes Schutzglas (112a) aufweist, das fest in dem Gehäuse aufgenommen ist.

6. Bedien- und Anzeigegerät nach einem der vorstehenden Ansprüche,
**dadurch gekennzeichnet,**
**dass** mindestens eine Dichtlippe (30) vorgesehen ist, die an der Nut (28) und/oder an dem Steg (26) angebracht ist und von der Nut (28) bzw. dem Steg (26) absteht, wobei beim Zusammenfügen des Gehäuses (18) und der Verblendung (22) die Dichtlippen (30) in den Steg (26) und/oder in die Nut (28) dichtend eingreifen.

7. Bedien- und Anzeigegerät nach Anspruch 6,
**dadurch gekennzeichnet,**
**dass** die Dichtlippen (30) keilförmig, rippenförmig, noppenförmig oder spitz ausgebildet sind.

8. Bedien- und Anzeigegerät nach einem der vorangehenden Ansprüche,
**dadurch gekennzeichnet,**
**dass** der Stöpsel (326) zylinderförmig, in einer Einschubrichtung sich leicht verjüngend ausgebildet ist.

9. Bedien- und Anzeigegerät nach einem der vorangehenden Ansprüche,
**dadurch gekennzeichnet,**
**dass** der Stöpsel (326) nach außen ragende spitze Stifte (230a, 230b, 330), Noppen, umlaufende Rippen oder Keile aufweisen.

10. Bedien- und Anzeigegerät nach einem der vorstehenden Ansprüche,
**dadurch gekennzeichnet,**
**dass** die Dichtvorrichtung (26, 28, 30, 226a, 226b, 230a, 230b, 326, 330) eine Einrastvorrichtung (40) aufweist.

11. Bedien- und Anzeigegerät nach einem der vorstehenden Ansprüche,
**dadurch gekennzeichnet,**
**dass** das Gehäuse (18) und die das Gehäuse (18) abdichtende Dichtvorrichtung (26, 28, 30, 226a, 226b, 230a, 230b, 326, 330) spülmaschinenfest und für eine Temperatur von mindestens 70 DEG C temperaturbeständig sind.

12. Bedien- und Anzeigegerät nach einem der vorstehenden Ansprüche,
**dadurch gekennzeichnet,**
**dass** das Gehäuse (18) zumindest teilweise aus einem transparenten oder teiltransparentem Material besteht.

13. Bedien- und Anzeigegerät nach einem der vorstehenden Ansprüche,
**dadurch gekennzeichnet,**
**dass** zur Stützung des Bedien- und Anzeigegeräts (10) das Gehäuse (18) mindestens eine Verstärkungsleiste aufweist, die aus demselben Werkstoff besteht und einstückig mit dem Gehäuse (18) verbunden ist.

14. Bedien- und Anzeigegerät nach einem der vorstehenden Ansprüche,
**dadurch gekennzeichnet,**
**dass** das Gehäuse (18) nach einer oder zwei Seiten hin offen ausgebildet ist und die offene Seite (232a, 232b, 332) jeweils von einem Deckel (24, 224a, 224b, 324) verschließbar ist.

15. Bedien- und Anzeigegerät nach Anspruch 12,
**dadurch gekennzeichnet,**
**dass** mindestens ein Deckel (24, 224a, 224b, 324) über eine Scharniervorrichtung (46) schwenkbar an dem Gehäuse (18) und/oder der Verblendung (22) angeordnet ist.

16. Bedien- und Anzeigegerät nach einem der Ansprüche 14 oder 15,
**dadurch gekennzeichnet,**
**dass** der schwenkbare Deckel (24, 224a, 224b, 324) über eine Verriegelungsvorrichtung (48) verschließbar.

17. Bedien- und Anzeigegerät nach einem der Ansprüche 14 bis 16,
**dadurch gekennzeichnet,**
**dass** mindestens ein Deckel (24, 224a, 224b, 324) aus dem gleichen Material wie das Gehäuse (18) besteht.

18. Bedien- und Anzeigegerät nach einem der vorstehenden Ansprüche,
**dadurch gekennzeichnet,**
**dass** das Gehäuse (18) im Bereich der Tastatur (14) eine dünnere Gehäusewanddicke aufweist, als außerhalb des Bereichs der Tastatur (14).

19. Bedien- und Anzeigegerät nach einem der vorstehenden Ansprüche,
**dadurch gekennzeichnet,**
**dass** die Tastatur (14) und das Gehäuse (18) aus demselben Werkstoff gefertigt sind und einstückig miteinander verbunden sind.

20. Bedien- und Anzeigegerät nach einem der vorstehenden Ansprüche,
**dadurch gekennzeichnet,**
**dass** das Gehäuse (18) Aussparungen zum Befestigen des Bedien- und Anzeigengeräts (10) an einer zugehörigen Halterung aufweist.

21. Bedien- und Anzeigegerät nach einem der vorstehenden Ansprüche,
**dadurch gekennzeichnet,**
**dass** das Gehäuse (18) mindestens eine Öffnung aufweist, durch die über eine wasserdichte Verbindung mindestens eine elektrische Leitung in das Bedien- und Anzeigegerät einführbar ist und/oder mindestens eine Steckerverbindung in das Bedien- und Anzeigegerät einsteckbar ist.

22. Bedien- und Anzeigegerät nach Anspruch 21,
**dadurch gekennzeichnet,**
**dass** sich in der Öffnung jeweils eine Dichtlippe befindet, die an dem hindurchgeführten Stecker wasserdichtend anliegt.

23. Bedien- und Anzeigegerät nach einem der vorstehenden Ansprüche,
**dadurch gekennzeichnet,**
**dass** das Gehäuse (18) aus einem Kunststoffschlauch besteht.

24. Bedien- und Anzeigegerät nach einem der vorstehenden Ansprüche,
**dadurch gekennzeichnet,**
**dass** das Gehäuse (18) und der Deckel (24) jeweils an einer Seite offene Enden aufweisen, wobei an den offenen Enden abgestufte Bereiche (42, 42a) vorgesehen sind, die weitestgehend passgenau ineinander verschiebbar sind.

25. Bedien- und Anzeigegerät nach Anspruch 24,
**dadurch gekennzeichnet,**
**dass** zumindest eine weitere Dichtlippe (30a) zur Abdichtung der abgestuften Bereiche (42, 42a) zwischen Deckel (24) und Gehäuse (18) vorgesehen ist.

26. Bedien- und Anzeigegerät nach einem der Ansprüche 6 bis 25,
**dadurch gekennzeichnet,**
**dass** Vertiefungen (44) vorgesehen sind, in die sich die Dichtlippen (30) und/oder die weiteren Dichtlippen (30a) eingraben können.

## Claims

1. A portable electrical control and display device having an indicator panel (12), a keyboard (14) with at least one key pad, and having a single, one-part housing (18) which is made of a temperature-resistant material and which seals the control and display device in a water-tight manner from the outside,
**characterized in that** a sleeve (22, 122, 222, 322) for accommodating the indicator panel (12), the key board (14), and a circuit board (20) and for supporting the housing (18, 118, 218, 318) and at least one sealing device (26, 28, 30, 226a, 226b, 230a, 230b, 326, 330) sealing the housing (18) and the sleeve (22, 122, 222, 322) in a water-tight manner from the outside are provided, the at least one sealing device having at least one sealing lip (30, 330, 230a) which is situated on the sleeve (322), or on a plug (326), or a cover (224a, 224b), the sealing lip protruding into the housing (318, 218) when the sleeve (22) and the housing (18), or the plug (326) or cover (224) and the housing (318, 218) are joined together, or the at least one sealing device having a peripheral groove (28) and a matching peripheral ridge (26) which are situated on opposite locations of the sleeve (22) and the housing (18) in such a way that the ridge (26) engages in the groove (28) when the housing (18) and the sleeve (22) are joined together.

2. The control and display device according to Claim 1,
**characterized in that** the housing (18) is made of a single, injection molded thermoplastic material.

3. The control and display device according to one of the foregoing Claims,
**characterized in that** at least part of the housing (18) contains a material made of TPU, TPE, PVC.

4. The control and display device according to one of the foregoing claims,
**characterized in that** the housing (18) and the sleeve (22) have a same shape and that the housing (18) encloses the sleeve (22) in an essentially form-fitting manner.

5. The control and display device according to one of the foregoing claims,
**characterized in that** the housing (118) has a transparent protecting glass (112a) which is fixedly mounted in the housing.

6. The control and display device according to one of the foregoing claims,
**characterized in that** at least one sealing lip (30) is provided which is applied to the groove (28) and/or the ridge (26) and protrudes from the groove (28) and/or the ridge (26), the sealing lips (30) sealingly engage in the ridge (26) and/or the groove (28) when the housing (18) and the sleeve (22) are joined together.

7. The control and display device according to Claim 6,
**characterized in that** the sealing lips (30) are designed in a wedge, rib, nub, or pointed tip shape.

8. The control and display device according to one of the foregoing claims,
**characterized in that** the plug (326) is designed in a cylindrical shape, tapering slightly in one direction of insertion.

9. The control and display device according to one of the foregoing claims,
**characterized in that** the plug (326) has nubs, peripheral ribs, wedges, or pointed tips (230a, 230b, 330) protruding outward.

10. The control and display device according to one of the foregoing claims,
**characterized in that** the sealing device (26, 28, 30, 226a, 226b, 230a, 230b, 326, 330) has a snap-in device (40).

11. The control and display device according to one of the foregoing claims,
**characterized in that** the housing (18) and the sealing device (26, 28, 30, 226a, 226b, 230a, 230b, 326, 330) which seals the housing (18) are cleaning-machine resistant and temperature resistant to a temperature of at least 70°C.

12. The control and display device according to one of the foregoing claims,
**characterized in that** the housing (18) is at least partially made of a transparent or semi-transparent material.

13. The control and display device according to one of the foregoing claims,
**characterized in that** in order to support the control and display device (10), the housing (18) has at least one reinforcing strip, which is made of the same material and is connected to the housing (18) forming a single piece.

14. The control and display device according to one of the foregoing claims,
**characterized in that** the housing (18) is open on one side or two sides and the open side (232a, 232b, 332) can be closed by a cover (24, 224a, 224b, 324).

15. The control and display device according to Claim 12,
**characterized in that** at least one cover (24, 224a, 224b, 324) is pivotingly arranged on the housing (18) and/or the sleeve (22) via a hinge device (46).

16. The control and display device according to one of Claims 14 through 15,
**characterized in that** the pivotable cover (24, 224a, 224b, 324) can be closed via a locking device (48).

17. The control and display device according to one of the Claims 14 through 16,
**characterized in that** at least one cover (24, 224a, 224b, 324) is made of the same material as the housing (18).

18. The control and display device according to one of the foregoing claims,
**characterized in that** the housing (18) has a reduced wall thickness in the area of the keyboard (14) compared to the wall thickness outside the keyboard (14) area.

19. The control and display device according to one of the foregoing claims,
**characterized in that** the keyboard (14) and the housing (18) are made of the same material and are connected to one another to form one piece.

20. The control and display device according to one of the foregoing claims,
**characterized in that** the housing (18) has recesses for attaching the control and display device (10) to an appropriate bracket.

21. The control and display device according to one of the foregoing claims,
**characterized in that** the housing (18) has at least one opening, through which an electric conductor can be introduced into the control and display device through a water-tight connection and/or at least one plug-and-socket connection can be inserted into the control and display device.

22. The control and display device according to Claim 21,
**characterized in that** there is a sealing lip in the opening, which is in water-tight contact with the inserted plug.

23. The control and display device according to one of the foregoing claims,
**characterized in that** the housing (18) is made of a plastic hose.

24. The control and display device according to one of the foregoing claims,
**characterized in that** the housing (18) and the cover (24) have open ends on one side, with stepped areas (42, 42a), which can be fitted into one another with great accuracy, provided on the open ends.

25. The control and display device according to Claim 24,
**characterized in that** at least one additional sealing lip (30a) is provided for sealing the stepped areas (42, 42a) between the cover (24) and the housing (18).

26. A control and display device according to one of Claims 6 through 25,
**characterized in that** depressions (44) are provided, into which the sealing lips (30) and/or the additional sealing lips (30a) can engage.

## Revendications

1. Appareil de commande et d'affichage électrique portable doté d'un panneau d'affichage (12), d'un clavier (14) avec au moins un panneau de touches et d'un boîtier (18) distinct monobloc constitué d'une matière résistante aux hautes températures et qui rend l'appareil de commande et d'affichage (10) étanche à l'eau vis-à-vis de l'extérieur,
**caractérisé en ce qu'**
un blindage (22, 122, 222, 322) est prévu pour recevoir le panneau d'affichage (12), le clavier (14) et une platine (20) et pour supporter le boîtier (18, 118, 218, 318), et au moins un dispositif d'étanchéité (26, 28, 30, 226a, 226b, 230a, 230b, 326, 330) rend le boîtier (18) et le blindage (22, 122, 222, 322) étanches à l'eau venant de l'extérieur, le ou les dispositifs d'étanchéité présentant au moins une lèvre d'étanchéité (30, 330, 230a) montée sur le blindage (322) ou sur un bouchon (326) ou un capot (224a, 224b), et qui s'insère dans le boîtier (318, 218) lors de l'assemblage du blindage (22) et du boîtier (18), ou du bouchon (326) ou du capot (224) avec le boîtier (318, 218), ou le ou les dispositifs d'étanchéité présentant une rainure périphérique (28) et une barrette périphérique (26) adaptée à celle-ci, qui sont disposées à des emplacements se faisant face du blindage (22) et du boîtier (18) de telle sorte que la barrette (26) pénètre dans la rainure (28) lors de l'assemblage du boîtier (18) et du blindage (22).

2. Appareil de commande et d'affichage selon la revendication 1,
**caractérisé en ce que**
le boîtier (18) est constitué d'une seule matière thermoplastique moulée par injection.

3. Appareil de commande et d'affichage selon une des revendications précédentes,
**caractérisé en ce que**
le boîtier (18) contient au moins en partie une matière à base de TPU (polyuréthanes thermoplastiques), de TPE (élastomères thermoplastiques) ou de PVC (polychlorure de vinyle).

4. Appareil de commande et d'affichage selon une des revendications précédentes,
**caractérisé en ce que**
le boîtier (18) et le blindage (22) présentent une forme identique et le boîtier (18) enveloppe le blindage (22) de manière sensiblement géométrique.

5. Appareil de commande et d'affichage selon une des revendications précédentes,
**caractérisé en ce que**
le boîtier (118) présente une glace de protection (112a) qui est fixée dans ce dernier.

6. Appareil de commande et d'affichage selon une des revendications précédentes,
**caractérisé en ce qu'**
au moins une lèvre d'étanchéité (30) est montée sur la rainure (28) et/ou sur la barrette (26) et s'écarte de la rainure (28) et/ou de la barrette (26), les lèvres d'étanchéité (30) pénétrant dans la barrette (26) et/ou dans la rainure (28) lors de l'assemblage du boîtier (18) et du blindage (22).

7. Appareil de commande et d'affichage selon la revendication 6,
**caractérisé en ce que**
les lèvres d'étanchéité (30) sont en forme de coins, en forme de nervures, en forme de boutons ou pointues.

8. Appareil de commande et d'affichage selon une des revendications précédentes,
**caractérisé en ce que**
le bouchon (326) est cylindrique et se rétrécit légèrement dans une direction d'insertion.

9. Appareil de commande et d'affichage selon une des revendications précédentes,
**caractérisé en ce que**
le bouchon (326) présente des picots pointus (230a, 230b, 330) saillant vers l'extérieur, des boutons, des nervures périphériques ou des coins.

10. Appareil de commande et d'affichage selon une des revendications précédentes,
**caractérisé en ce que**
le dispositif d'étanchéité (26, 28, 30, 226a, 226b, 230a, 230b, 326, 330) présente un dispositif d'encliquetage (40).

11. Appareil de commande et d'affichage selon une des revendications précédentes,
**caractérisé en ce que**
le boîtier (18) et le dispositif d'étanchéité (26, 28, 30, 226a, 226b, 230a, 230b, 326, 330) rendant le boîtier (18) étanche sont conçus pour un lavage en machine et résistent à une température d'au moins 70 °C.

12. Appareil de commande et d'affichage selon une des revendications précédentes,
**caractérisé en ce que**
le boîtier (18) est constitué au moins partiellement d'une matière transparente ou translucide.

13. Appareil de commande et d'affichage selon une des revendications précédentes,
**caractérisé en ce que**
pour supporter l'appareil de commande et d'affichage (10), le boîtier (18) présente au moins une baguette de renfort constituée de la même matière et liée d'une seule pièce au boîtier (18).

14. Appareil de commande et d'affichage selon une des revendications précédentes,
**caractérisé en ce que**
le boîtier (18) est ouvert sur un ou deux côtés et chaque côté ouvert (232a, 232b, 332) peut être fermé par un capot (24, 224a, 224b, 324).

15. Appareil de commande et d'affichage selon la revendication 12,
**caractérisé en ce qu'**
au moins un capot (24, 224a, 224b, 324) est monté de manière pivotante par le biais d'un dispositif à charnière (46) sur le boîtier (18) et/ou le blindage (22).

16. Appareil de commande et d'affichage selon une des revendications 14 ou 15,
**caractérisé en ce que**
le capot pivotant (24, 224a, 224b, 324) peut être fermé par un dispositif de verrouillage (48).

17. Appareil de commande et d'affichage selon une des revendications 14 à 16,
**caractérisé en ce qu'**
au moins un capot (24, 224a, 224b, 324) est constitué de la même matière que le boîtier (18).

18. Appareil de commande et d'affichage selon une des revendications précédentes,
**caractérisé en ce que**
le boîtier (18) présente dans la zone du clavier (14) une épaisseur de paroi de boîtier plus fine qu'en dehors de la zone du clavier (14).

19. Appareil de commande et d'affichage selon une des revendications précédentes,
**caractérisé en ce que**
le clavier (14) et le boîtier (18) sont fabriqués dans la même matière et sont liés entre eux pour former une seule pièce.

20. Appareil de commande et d'affichage selon une des revendications précédentes,
**caractérisé en ce que**
le boîtier (18) présente des évidements pour fixer l'appareil de commande et d'affichage (10) sur une monture intégrée.

21. Appareil de commande et d'affichage selon une des revendications précédentes,
**caractérisé en ce que**
le boîtier (18) présente au moins une ouverture par laquelle au moins une ligne électrique peut être insérée dans l'appareil de commande et d'affichage à l'aide d'une connexion étanche et/ou au moins un connecteur peut être enfiché dans l'appareil de commande et d'affichage.

22. Appareil de commande et d'affichage selon la revendication 21,
**caractérisé en ce que**
dans l'ouverture se trouve une lèvre d'étanchéité qui vient s'appliquer de manière étanche à l'eau sur le connecteur qui la traverse.

23. Appareil de commande et d'affichage selon une des revendications précédentes,
**caractérisé en ce que**
le boîtier (18) est constitué d'une gaine en matière plastique.

24. Appareil de commande et d'affichage selon une des revendications précédentes,
**caractérisé en ce que**
le boîtier (18) et le capot (24) présentent chacun d'un côté des extrémités ouvertes dans lesquelles des zones étagées (42, 42a) peuvent coulisser l'une dans l'autre avec la plus grande précision.

25. Appareil de commande et d'affichage selon la revendication 24,
**caractérisé en ce qu'**
au moins une autre lèvre d'étanchéité (30a) est prévue pour rendre étanches les zones étagées (42, 42a) entre le capot (24) et le boîtier (18).

26. Appareil de commande et d'affichage selon une des revendications 6 à 25,
**caractérisé par**
des renfoncements (44) dans lesquels les lèvres d'étanchéité (30) ou les autres lèvres d'étanchéité (30a) peuvent s'insérer.
